# EUROPÄISCHE PATENTSCHRIFT

(11) **EP 0 483 135 B1**
(45) Veröffentlichungstag und Bekanntmachung des Hinweises auf die Patenterteilung: **09.11.1994**
(21) Anmeldenummer: 89908702.7
(22) Anmeldetag: 14.07.1989
(51) Int. Cl.: F01N 3/28, F01N 3/20

(54) **KATALYSATOR-GEHÄUSE UND TRÄGERKÖRPER INSBESONDERE FÜR STARTKATALYSATOREN**
CATALYZER HOUSING AND SUPPORT, IN PARTICULAR FOR STARTING CATALYZERS
ENVELOPPE DE CATALYSEUR ET SUPPORT, NOTAMMENT POUR CATALYSEURS DE DEMARRAGE

(30) Priorität: 26.08.1988 DE 8810816 U
(43) Veröffentlichungstag der Anmeldung: 06.05.1992
(73) Patentinhaber: Emitec Gesellschaft für Emissionstechnologie mbH, 53797 Lohmar (DE)
(72) Erfinder: Swars, Helmut, D-5060 Bergisch Gladbach 1 (DE)
(74) Vertreter: Kahlhöfer, Hermann, Dipl.-Phys.
(86) Internationale Anmeldenummer: EP8900819
(87) Internationale Veröffentlichungsnummer: WO9002251

(56) Entgegenhaltungen:
- AT-C- 316 934
- DD-A- 97 920
- FR-A- 1 382 486
- US-A- 3 644 098
- US-A- 3 963 447
- US-A- 4 032 310
- US-A- 4 457 141
- PATENT ABSTRACTS OF JAPAN, vol. 9, no. 275 (M-426)(1998) 02 November 1985 & JP-A-60 119314 (NIPPON JIDOSHA BUHIN SOGO KENKYUSHO) 26 Juni 1985

## Beschreibung

Die vorliegende Erfindung betrifft ein Gehäuse mit einem Katalysator-Trägerkörper für Kraftfahrzeuge, insbesondere für einen motornah eingebauten Katalysator, einen sogenannten Startkatalysator.

Für thermisch hochbelastete Katalysatoren werden im allgemeinen metallische Trägerkörper eingesetzt, wie sie beispielsweise in der EP-B-0 136 515, der EP-A-0 159 468, der EP-A-0 220 468, der EP-A-0 245 737 und der EP-A-0 245 738 beschrieben sind. Metallische Katalysator-Trägerkörper bestehen üblicherweise aus strukturierten Blechen, welche einen Wabenkörper bilden, der eine Vielzahl von für das Abgas durchlässigen Strömungskanälen aufweist. Die strukturierten Bleche sind innerhalb eines Mantelrohres oder eines geschlossenen Gehäuses angeordnet, welches durch Flansche oder Anschweißenden mit dem übrigen Abgassystem verbunden ist. Für besonders nah am Auslaß eines Motors angeordnete Startkatalysatoren ist eine solche Lösung nicht unbedingt optimal, da die Gehäuse nicht kostengünstig hergestellt werden können und sich außerdem Platzprobleme und Schwierigkeiten beim Anschluß an die üblicherweise gegossenen sogenannten Auspuffkrümmer ergeben. Will man zusätzlich noch Strömungsleitelemente vorsehen, welche je nach Temperatur des Abgasstromes die Gase durch den Katalysator oder an diesem vorbei leiten, so eignen sich die bisherigen Gehäusekonzepte nicht mehr. Des weiteren ist es bekannt, daß Katalysatoren zunächst auf ihrer vom Abgas direkt angeströmten Vorderseite geschädigt werden, was zu einer abnehmenden Umsetzungsrate führen kann, da der vordere Bereich des Katalysators zur Umsetzung am meisten beiträgt.

In GB-A-1 289 928 ist eine in das Abgassystem eines Kraftfahrzeuges integrierbare Vorrichtung offenbart, die es gestattet, zwei auf einer Platte befestigte Reaktionseinheiten schubladenartig in ein Gehäuse einzuführen oder herauszuholen, wobei das Gehäuse in das Abgassystem integriert ist. Bei den beiden Reaktionseinheiten handelt es sich um eine Oxidations- und eine Reduktionseinheit, die in Serie von den Abgasen durchströmbar sind. Diese Anordnung ist jedoch in ihrem Aufbau kompliziert und für die Verwendung als motornaher Startkatalysator wegen den dabei auftretenden hohen Temperaturen nicht geeignet.

Aufgabe der vorliegenden der Erfindung ist es, ein Gehäuse zu schaffen, welches die Probleme des Standes der Technik vermeidet, kostengünstig herstellbar und haltbar ist, und außerdem das nachträgliche Auswechseln bzw. Wenden eines Katalysators zuläßt. Zur Lösung dieser Aufgabe wird ein Gehäuse mit einem Katalysator-Trägerkörper mit folgenden Merkmalen vorgeschlagen.
a) Das Gehäuse weist einen größeren Querschnitt auf als der Katalysator-Trägerkörper.
b) Das Gehäuse weist eine etwa rechteckige Öffnung auf, deren Länge größer als die maximale Länge des Katalysator-Trägerkörpers und deren Breite größer als die maxiamale Breite des Katalysator-Trägerkörpers sind.
c) Der Katalysator-Trägerkörper ist an einer flachen oder gewölbten Halteplatte befestigt, welche eine größere Länge und Breite hat als die Öffnung im Gehäuse und diese daher wie ein Deckel verschließt, wobei der Katalysator-Trägerkörper in das Innere des Gehäuses ragt.
d) Das Gehäuse und/oder die Halteplatte weisen Befestigungsmittel zur gegenseitigen Fixierung auf.
e) Der Katalysator-Trägerkörper ist ein metallischer Wabenkörper für motornahen Einbau mit einem metallischen Mantelrohr, welches entweder an einer flachen oder gewölbten Halteplatte befestigt ist oder selbst in einem Teilbereich verlängert bzw. verbreitert und als Halteplatte ausgebildet ist.
f) Der Katalysator-Trägerkörper ist symmetrisch in Bezug auf eine senkrecht zu seiner Durchströmungsrichtung liegende Ebene, so daß er in dem gleichen Gehäuse in zwei gegeneinander um 180° gedrehten Stellungen einbaubar ist.

Ein solches Gehäuse, welches Teil einer Abgasleitung ist, nimmt durch seine Öffnung einen Katalysator-Trägerkörper auf, welcher an einer Halteplatte befestigt ist, welche mach der Montage des Katalysator-Trägerkörpers die Öffnung dicht verschließt.

Dieses Gehäuse-Konzept, bei dem sich ein Katalysator quasi wie eine Schublade einschieben und herausziehen läßt, weist viele vorteilhafte Ausgestaltungsmöglichkeiten auf, welche in den abhängigen Ansprüchen angegeben sind. Eine für die Herstellungskosten entscheidende Möglichkeit besteht darin, das Gehäuse bis auf den Deckel mit dem Katalysator-Trägerkörper als Gußteil herzustellen. Solche Gußteile haben sich bei Kfz-Abgassystemen im motornahen Bereich bereits vielfach bewährt und sie lassen sich auf übliche Weise mit Flanschen an das übrige Abgassystem anschließen.

Zwar haben Katalysatoren inzwischen eine lange Lebensdauer erreicht, jedoch ist diese bei Startkatalysatoren möglicherweise geringer als die Lebensdauer des übrigen Abgassystems. Bei den erfindungsgemäßen Gehäusen können die Katalysatoren leicht im Rahmen einer üblichen Inspektion ausgewechselt werden. Nahezu eine Verdoppelung der Lebensdauer läßt sich unter Umständen auch durch das bloße Wenden eines Katalysator-Trägerkörpers erreichen, wodurch die kaum geschädigte Abströmseite die bisherige Funktion der Anströmseite übernehmen kann.

Da motornahe Startkatalysatoren ihre wichtigste Wirkung in der Kaltstartphase eines Kraftfahrzeuges entfalten, gibt es Konzepte, bei denen der Katalysator nur in dieser Phase vom Abgas durchströmt wird, während er beim späteren Betrieb umgangen wird. Ein erfindungsgemäßes Gehäuse bietet die Möglichkeit, neben dem Katalysator-Trägerkörper auch noch einen freien Querschnitt zur Umströmung des Katalysators vorzusehen, wobei außerdem Strömungsleitmittel, wie z. B. eine temperaturabhängig bewegbare Klappe, im gleichen Gehäuse untergebracht werden können. Sofern solche Strömungsleitmittel am Katalysator-Trägerkörper oder dessen Halteplatte befestigt sind, können beide gemeinsam eingesetzt und ausgewechselt werden. Alternativ besteht natürlich die Möglichkeit, die Strömungsleitmittel innen am Gehäuse zu befestigen, so daß der Katalysator allein ausgewechselt bzw. umgedreht werden kann.

Katalysator-Trägerkörper, welche besonders zum Einbau in erfindungsgemäße Gehäuse geeignet sind, werden anhand der Zeichnung näher beschrieben. Grundsätzlich eignen sich fast alle Querschnittsformen für einen Einbau in entsprechend geformte erfindungsgemäße Gehäuse. So können Katalysator-Trägerkörper mit rundem Querschnitt ebenso mit einer Halteplatte versehen sein, wie Katalysator-Trägerkörper mit etwa halbkreisförmigem oder halbovalem Querschnitt. Wesentlich ist, daß ein Katalysator-Trägerkörper den Querschnitt des Gehäuses möglichst vollständig ausfüllt, sofern keine Umgehung des Katalysatorkörpers vorgesehen ist. Sofern eine temperaturabhängig zu öffnende Umgehung vorgesehen ist, braucht der Katalysator-Trägerkörper natürlich nur einen Teil des Gehäusequerschnittes auszufüllen.

Für Abgasanlagen mit zwei oder mehr parallelen Strängen können auch entsprechend viele erfindungsgemäße Gehäuse so nebeneinander angeordnet sein, daß die zugehörigen Katalysatoren auf einer gemeinsamen Halteplatte befestigt und gemeinsam handhabbar sein können.

Zwei Ausführungsbeispiele der Erfindung sind schematisch in der Zeichnung dargestellt, und zwar zeigen
Figur 1 einen Längsschnitt durch ein erfindungsgemäßes Gehäuse mit einem temperaturabhängig umgehbaren Katalysator,
Figur 2 einen Längsschnitt durch ein Gehäuse mit einem nicht umgehbaren Katalysator und
Figur 3 einen Querschnitt durch Figur 2 im Bereich des Katalysators.

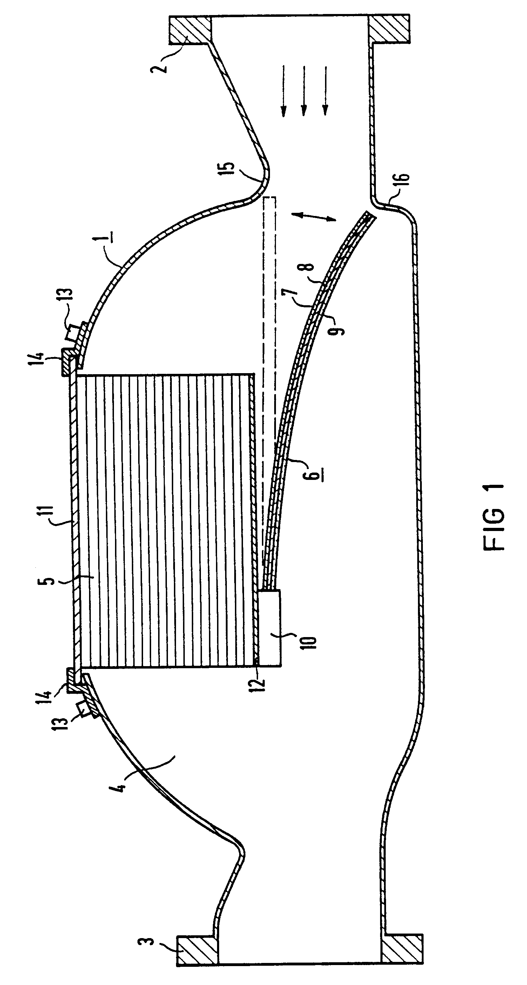

Figur 1 zeigt ein erfindungsgemäßes, bauchiges Gehäuse 1 mit Flanschen 2, 3 an seinen beiden Enden. Der freie Querschnitt 4 im bauchigen Bereich des Gehäuses 1 ist nur teilweise von einem Katalysator-Trägerkörper 5 ausgefüllt. Dieser Katalysator-Trägerkörper 5 ist an einer Halteplatte 11 befestigt und weist ein Mantelrohr 12 auf. Das Gehäuse 1 hat in seinem oberen Bereich eine der Form des Katalysator-Trägerkörpers 5 entsprechende Öffnung, welche von der Halteplatte 11 wie mit einem Deckel verschlossen ist. Dabei wird die Halteplatte 11 durch Befestigungsmittel 13, 14 gegenüber dem Gehäuse 1 fixiert. An dem Mantelrohr 12 des Katalysator-Trägerkörpers 5 ist mit einer Halterung 10 eine Bimetallklappe 6 befestigt, welche aus mindestens zwei Metallschichten 7, 8 mit unterschiedlichem thermischen Ausdehnungskoeffizienten besteht und ggf. noch mit einer Wärmeisolierung 9 versehen ist. Diese Bimetallklappe 6 befindet sich in kaltem Zustand in der dargestellten Position, so daß sie in Zusammenwirken mit einer Ausformung 16 des Gehäuses 1 das durch Pfeile angedeutete anströmende Abgas zum Katalysator-Trägerkörper hin ablenkt. In kaltem Zustand wird daher der Katalysator-Trägerkörper vom größten Teil des Abgases durchströmt. Wärmt sich jedoch die Bimetallklappe 6 auf, so bewegt sie sich, wie durch einen Pfeil angedeutet, in die gestrichelt gezeichnete Position. Im Zusammenwirken mit der Form 15 an der Einlaßseite des Gehäuses wird so der Katalysator-Trägerkörper 5 weitestgehend vor heißem Abgas abgeschirmt. Dabei ist der Katalysator-Trägerkörper 5 zusammen mit der Bimetallklappe 6 leicht auswechselbar.

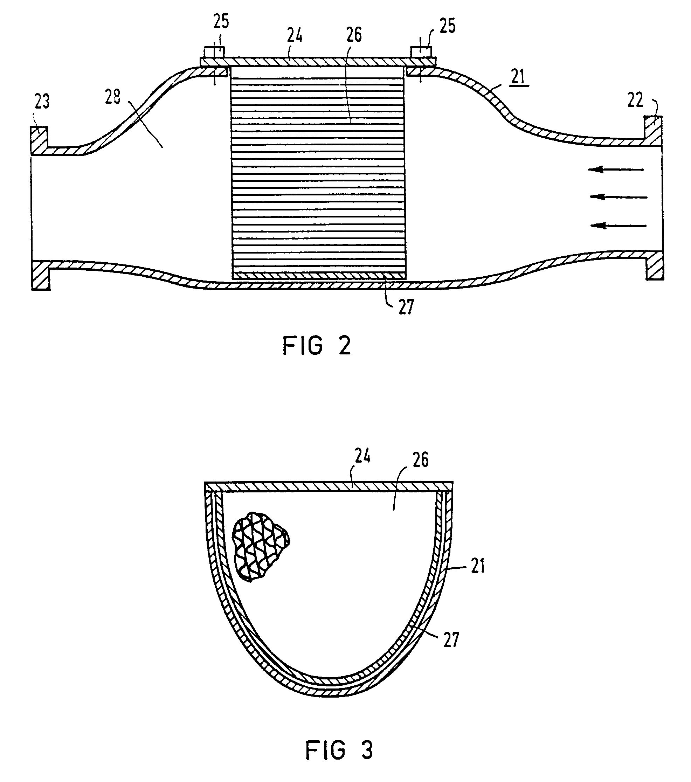

Figur 2 zeigt ein Gehäuse 21, dessen bauchiger Querschnitt 28 möglichst vollständig mit einem eingesetzten Katalysator-Trägerkörper 26 ausgefüllt ist. Das Gehäuse 21 weist an seinen beiden Enden Flansche 22, 23 auf, mit deren Hilfe es in ein Auspuffsystem einbaubar ist. Im vorliegenden Ausführungsbeispiel hat der Katalysator-Trägerkörper 26 wie das Gehäuse 21 einen halbovalen Querschnitt. Der Katalysator-Trägerkörper 26 ist von einem Mantelrohr 24, 27 umgeben, wobei die flache Seite 24 des Mantelrohres als Deckel für die Öffnung im Gehäuse 21 ausgebildet ist, durch welche der Katalysator-Trägerkörper 26 in das Innere ragt. Dieser Deckel 24 ist mittels Schrauben 25 an dem Gehäuse 21 befestigt.

Erfindungsgemäße Gehäuse und die zugehörigen Katalysator-Trägerkörper sind unabhängig voneinander und kostengünstig herstellbar und bieten insbesondere bei motornahem Einbau erhebliche Vorteile.

## Patentansprüche

1. Katalysator-Anordnung zur Abgasreinigung, enthaltend ein Gehäuse (1; 21) und einen Katalysator-Trägerkörper (5; 26), mit folgenden Merkmalen:
a) das Gehäuse (1; 21) weist einen größeren Querschnitt auf als der Katalysator-Trägerkörper (5; 26);
b) das Gehäuse (1; 21) weist eine etwa rechteckige Öffnung auf, deren Länge größer als die maximale Länge des Katalysator-Trägerkörpers (5; 26) und deren Breite größer als die maximale Breite des Katalysator-Trägerkörpers (5; 26) sind;
c) der Katalysator-Trägerkörper (5; 26) ist an einer Halteplatte (11; 24) befestigt, welche eine größere Länge und Breite hat als die Öffnung im Gehäuse (1; 21) und diese daher wie ein Deckel verschließt, wobei der Katalysator-Trägerkörper (5; 26) in das Innere (4; 28) des Gehäuses (1; 21) ragt;
d) das Gehäuse (1; 21) und/oder die Halteplatte (11; 24) weisen Befestigungsmittel (12, 13; 25) zur gegenseitigen Fixierung auf, dadurch kennzeichnet
(e) daß der Katalysator-Trägerkörper ein metallsicher Wabenkröper (5; 26) für motornahen Einbau mit einem metallischen Mantelrohr (12; 24, 27) ist, welches entweder an einer flachen oder gewölbten Halteplatte (11) befestigt ist oder selbst in einem Teilbereich verlängert bzw. verbreitet und als Halteplatte (24) ausgebildet ist und
(f) daß der Katalysator-Trägerkörper (5; 26) symmetrisch in Bezug auf eine senkrecht zu seiner Durchströmungsrichtung liegende Ebene ist, so daß er in dem gleichen Gehäuse (1; 21) in zwei gegeneinander um 180° gedrehten Stellungen einbaubar ist.

2. Katalysator-Anordnung nach Anspruch 1,
**dadurch gekennzeichnet,** daß das Gehäuse (1; 21) ein Gußteil ist, vorzugsweise aus einer für Auslaßleitungen bei Kfz-Motoren üblichen Legierung.

3. Katalysator-Anordnung nach Anspruch 2,
**dadurch gekennzeichnet,** daß das Gehäuse (1; 21) an mindestens einem Ende einen Flansch (2, 3; 22, 23) zum Anschluß an mindestens ein weiteres Abgas-Leitungsstück aufweist.

4. Katalysator-Anordnung nach Anspruch 2 oder 3,
**dadurch gekennzeichnet,** daß das Gehäuse (1; 21) eine zwischen zwei Flanschen (2, 3; 22, 23) liegende Ausbauchung (4; 29) aufweist.

5. Katalysator-Anordnung nach einem der vorhergehenden Ansprüche,
**dadurch gekennzeichnet,** daß der Querschnitt (28) des Gehäuses (21) nur geringfügig größer ist als der des einzubauenden Katalysator-Trägerkörpers (26).

6. Katalysator-Anordnung nach Anspruch 2, 3 oder 4,
**dadurch gekennzeichnet,** daß der Querschnitt (4) des Gehäuses (1) erheblich größer als der Querschnitt des Katalysator-Trägerkörpers (5) ist und daß in dem Gehäuse (1) zusätzlich Strömungsleitmittel (6), z. B. eine Bimetallklappe, befestigt sind, welche in Abhängigkeit von der Temperatur Strömungswege durch den Katalysator-Trägerkörper (5) oder an diesem vorbei freigeben.

7. Katalysator-Anordnung nach einem der vorhergehenden Ansprüche
**dadurch gekennzeichnet,** daß zusätzlich Strömungsleitmittel (6), z. B. eine Bimetallklappe, an dem Katalysator-Trägerkörper (5, 12) oder dessen Halteplatte (11) befestigt und zusammen mit diesem einbaubar bzw. ausbaubar sind.

8. Katalysator-Trägerkörper für eine Katalysator-Anordnung nach einem der vorhergehenden Ansprüche
**dadurch gekennzeichnet,** daß der Katalysator-Trägerkörper (26) einen etwa halbkreisförmigen oder halbovalen Querschnitt hat, wobei die flache Seite als Halteplatte (24) ausgebildet ist.

9. Katalysator-Trägerkörper nach Anspruch 8
**dadurch gekennzeichnet,** daß zwei oder mehr Katalysator-Trägerkörper mit ihren Halteplatten zu einer Einheit zusammengefaßt sind derart, daß sie für mehrsträngige Abgasanlagen gemeinsam handhabbar sind.

## Claims

1. A catalytic converter arrangement for exhaust gas purification, containing a housing (1; 21) and a catalytic converter-carrier body (5; 26), having the following features:
a) the housing (1; 21) has a larger cross-section than the catalytic converter-carrier body (5; 26);
b) the housing (1; 21) has an approximately rectangular opening whose length exceeds the maximum length of the catalytic converter-carrier body (5; 26) and whose width exceeds the maximum width of the catalytic converter-carrier body (5; 26);
c) the catalytic converter-carrier body (5; 26) is fixed to a holding plate (11; 24) whose length and width exceed those of the opening in the housing (1; 21) and the holding plate therefore closes like a cover, wherein the catalytic converter-carrier body (5; 26) projects into the inside (4; 28) of the housing (1; 21);
d) the housing (1; 21) and/or the holding plate (11; 24) have securing means (12; 13; 25) for fixing them together,
characterised in that
(e) the catalytic converter-carrier body is a metal honeycomb body (5; 26) for installation close to the engine, having a metal tubular cover (12; 24, 27) which is secured either to a flat or a curved holding plate (11), or is itself extended in length or widened in a partial region in the form of a holding plate (24) and
(f) that the catalytic converter-carrier body (5; 26) is symmetrical in relation to a plane lying vertically to its through-flow direction, so that it can be fitted in the same housing (1; 21) in two positions which can be rotated through 180° relative to each other.

2. A catalytic converter arrangement according to Claim 1, characterised in that the housing (1; 21) is a cast part, preferably of an alloy which is conventional for exhaust pipes with motor vehicle engines.

3. A catalytic converter arrangement according to Claim 2, characterised in that the housing (1; 21) has a flange (2, 3; 22, 23) at at least one end for attachment to at least one other exhaust gas-conductor piece.

4. A catalytic converter arrangement according to Claim 2 or Claim 3, characterised in that the housing (1; 21) has a bulge (4, 28) which is disposed between two flanges (2, 3; 22, 23).

5. A catalytic converter arrangement according to one of the preceding claims, characterised in that the cross-section (28) of the housing (21) is only slightly greater than that of the catalytic converter-carrier body (26) to be fitted in it.

6. A catalytic converter arrangement according to Claim 2, 3 or 4, characterised in that the cross-section (4) of the housing (1) is considerably greater than the cross-section of the catalytic converter-carrier body (5), and that flow conduction means (6), e.g. a bimetal flap, are additionally fixed in the housing (1), which, in dependence on temperature, free current paths through the catalytic converter - carrier body (5) or past it.

7. A catalytic converter arrangement according to one of the preceding claims, characterised in that flow conduction means (6), e.g. a bimetal flap, are additionally fixed to the catalytic converter-carrier body (5, 12) or its holding plate (11), and can be fitted or removed together therewith.

8. A catalytic converter-carrier body for a catalytic converter arrangement according to one of the preceding claims, characterised in that the catalytic converter-carrier body (26) has an approximately circular or semi-oval cross-section, wherein the flat side is in the form of a holding plate (24).

9. A catalytic converter-carrier body according to Claim 8, characterised in that two or more catalytic converter-carrier bodies together with their holding plates make up a unit in such a way that they are able to be handled jointly for multi-line exhaust gas installations.

## Revendications

1. Un arrangement de catalyseur pour l'épuration des gaz d'échappement comprenant un boîtier (1 ; 21) et un corps support de catalyseur (5 ; 26), avec les caractéristiques suivantes :
a) le boîtier (1 ; 21) a une section transversale plus grande que le corps support de catalyseur (5 ; 26) ;
b) le boîtier (1 ; 21) possède une ouverture d'une forme à peu près rectangulaire dont la longueur est supérieure à la longueur maximale du corps support de catalyseur (5 ; 26) et dont la largeur est supérieure à la largeur maximale du corps support de catalyseur (5 ; 26) ;
c) le corps support de catalyseur (5 ; 26) est fixé à une plaque de retenue (11 ; 24) présentant une longueur et une largeur supérieures à l'ouverture du boîtier (1 ; 21) et fermant ainsi celle-ci comme un couvercle, le corps support de catalyseur (5 ; 26) étant en saillie vers l'intérieur (4 ; 28) du boîtier (1 ; 21) ;
d) le boîtier (1 ; 21) et/ou la plaque de retenue (11, 24) présentent des moyens de fixation (12, 13 ; 25) pour une fixation réciproque,
**caractérisé en ce que**
e) le corps support de catalyseur est un corps alvéolaire métallique (5 ; 26) pour le montage au voisinage du moteur avec un tube-enveloppe métallique (12 ; 24, 27) qui est soit fixé à la plaque de retenue (11) plate ou arquée, soit prolongé ou élargi lui-même dans une zone partielle et formé comme plaque de retenue (24) et
f) le corps support de catalyseur (5 ; 26) est symétrique par rapport au plan perpendiculaire à son sens d'écoulement de façon que l'on puisse l'installer dans le même boîtier (1 ; 21) en deux positions tournées de 180° l'une par rapport à l'autre.

2. Arrangement de catalyseur selon la revendication 1, caractérisé en ce que le boîtier (1 ; 21) est une pièce moulée, de préférence d'un alliage utilisé d'habitude pour les conduits de sortie de moteurs automobiles.

3. Arrangement de catalyseur selon la revendication 2, caractérisé en ce que le boîtier (1; 21) présente à au moins une extrémité un flasque (2, 3 ; 22, 23) pour le raccordement à au moins une autre partie de conduite de gaz d'échappement.

4. Arrangement de catalyseur selon la revendication 2 ou 3, caractérisé en ce que le boîtier (1 ; 21) présente un évasement (4 ; 28) situé entre les flasques (2, 3 ; 22, 23).

5. Arrangement de catalyseur selon l'une des revendications précédentes, caractérisé en ce que la section transversale (28) du boîtier (21) est légèrement plus grande que celle du corps support de catalyseur (26) à installer.

6. Arrangement de catalyseur selon les revendications 2, 3 et 4, caractérisé en ce que la section transversale (4) du boîtier (1) est considérablement plus grande que la section transversale du corps support de catalyseur (5) et en ce que des moyens de conduite de l'écoulement, (6), par exemple un volet bimétallique, sont fixés dans le boîtier (1) libérant en fonction de la température des chemins d'écoulement à travers le corps support de catalyseur (5) ou à côté de celui-ci.

7. Arrangement de catalyseur selon l'une des revendications précédentes, caractérisé en ce qu'en plus des moyens de conduite d'écoulement (6), par exemple un volet bimétallique, sont fixés au corps support de catalyseur (5, 12) ou à sa plaque de retenue (11), que l'on peut monter ou démonter ensemble avec celui-ci.

8. Corps support de catalyseur pour un arrangement de catalyseur selon l'une des revendications précédentes, caractérisé en ce que le corps support de catalyseur (26) présente une section transversale d'une forme d'à peu près un demi-cercle ou un demi-ovale, le côté plat étant réalisé comme plaque de retenue (24).

9. Corps de support catalyseur selon la revendication 8, caractérisé en ce que deux ou plusieurs corps supports de catalyseur sont regroupés avec la plaque de retenue pour former une unité d'une façon telle que l'on puisse les utiliser ensemble pour les installations de gaz d'échappement multilignes.
